# EUROPEAN PATENT SPECIFICATION

(11) **EP 2 035 199 B1**
(45) Date of publication and mention of the grant of the patent: **02.06.2010**
(21) Application number: 07805664.5
(22) Date of filing: 26.06.2007
(51) Int. Cl.: B27M 1/08, B23Q 1/66, B23Q 7/04

(54) **MACHINE TOOL OR MACHINING CENTRE WITH NUMERICALLY CONTROLLED DOUBLE ADJUSTMENT OF THE CLAMPING MEMBERS**
WERKZEUGMASCHINE ODER BEARBEITUNGSZENTRUM MIT NUMERISCH GESTEUERTER DOPPELTER EINSTELLUNG DER KLEMMELEMENTE
MACHINE-OUTIL OU CENTRE D'USINAGE À DOUBLE RÉGLAGE PAR COMMANDE NUMÉRIQUE DES ÉLÉMENTS DE BLOCAGE

(30) Priority: 05.07.2006 IT FI20060171
(43) Date of publication of application: 18.03.2009
(73) Proprietor: Paolino Bacci S.r.l., 56021 Cascina, PI (IT)
(72) Inventor: RUGGIERI, Alberto, Pisa (IT)
(74) Representative: Mannucci, Michele
(86) International application number: PCT/IT2007/000452
(87) International publication number: WO 2008/004264

(56) References cited:
- EP-A- 0 873 817
- EP-A- 1 055 485
- US-A- 5 429 461
- US-A- 5 468 101
- US-A- 5 700 117
- US-A- 5 829 151

## Description

### Technical field

The present invention relates to improvements to machining centres or machine tools, in particular - although not exclusively - for machining workpieces made of wood, plastic, light alloys, aluminium, composite materials or the like.

### State of the art

Within the scope of the present description and of the appended claims, machining centre or machine tool is intended in general as an aggregate of mechanical components organized and controlled to perform chip removal machining for on workpieces. A machining centre will therefore generically be provided with a tool head or machining head, with one or more spindles, and with one or more supports for the workpieces to be machined. The support and the head are movable with respect to each other according to a plurality of numerically controlled axes. Unless otherwise specified, the relative movement can be obtained by making one or other or both of the two components movable with respect to a fixed system of reference.

Numerically controlled axis is intended generically as a system that imparts a translational movement in one direction in space or an oscillatory or rotational movement about an axis of oscillation or rotation, under the control of a program and with the use of a drive and of a servo motor.

To machine workpieces of various shapes, numerically controlled machining centres are provided with supports for the workpieces, which are clamped on the supports using clamping members. These members can directly clamp the workpieces to be machined, or fixtures designed to carry these workpieces. In general, to clamp workpieces of different shapes adjustable clamping members, which can be adapted to the shape of the workpieces or of the fixtures to be clamped each time, must be provided. The supports with the clamping members are also used for referencing of the workpieces to be machined with respect to one or more reference surfaces, i.e. to take them to a specific position in space, to which the machining positions are referred.

Machining centres are known, which are provided with workpiece supports in the form of tables, for example, but not necessarily horizontal and flat, which have variable dimensions, i.e. adjustable in at least one direction, to adapt to the dimension of the workpieces to be machined. An example of a machining centre with a supporting surface for workpieces with variable dimensions is described in EP-A-873817.

The tables can carry manual or automatic clamping systems.

When a limited series of workpieces must be machined, i.e. when limited batches of identical workpieces must be produced, frequent operations to adjust the workpiece clamping members are required, resulting in a high incidence of skilled workers and extensive machine downtime, both factors resulting in an increase in machining costs and therefore in the cost of the finished workpiece.

It is therefore important to reduce set-up times, i.e. to position and configure the supports and the clamping members at each machining cycle of a specific production batch.

Therefore, systems have been produced for positioning the workpiece supports on a horizontal plane, which make use of position transducers or also motorized systems or actual numerically controlled systems (EP-A-1055485).

These systems allow a high level of automation of the set-up phase of machining centres but imply high machine costs, due to the use of a noteworthy number of complex and costly components, in particular when the number of members to be set up is considerable.

US-A-5,700,117 describes a machine for machining wooden panels by means of an operating head to carry tools, movable along numerically controlled axes of translation in a horizontal plane. The panels to be machined are clamped on a bench by means of clamping elements, e.g. of the suction type, which must be previously positioned in appropriate points as a function of the dimension and shape of the panel. For this purpose the clamping members are movable on a guide system with a cross arrangement, i.e. a system of guides that allow movement of the clamping members along two orthogonal horizontal axes of adjustment. Movements are performed directly by the tool head, which for this purpose has an extractable rod, which engages selectively in holes associated with one or other of the various clamping members to be positioned. The servo motors that move the head along the two numerically controlled orthogonal axes are, therefore, in this case also used to position the single clamping members. To detect the position of the clamping members specific position sensors are used that determine the position of the various members. This known machine has some drawbacks, both from the viewpoint of costs, which in any case remain high due to the need to provide position sensors, and from the viewpoint of reliability, as the translational and positioning movement is performed using the tool head. This circumstance is particularly disadvantageous, as any resistance to the movement, for example due to the presence of debris on the sliding guides, causes the occurrence of even noteworthy mechanical stresses on the head, according to multiple possible variously oriented directions in the horizontal plane. This leads to risks of deformations in the mechanical supporting structure of the head and in any case inaccuracies in machining precision. Moreover, this known machine is designed solely to machine panels and therefore the configuration of the positioning systems of the clamping members is not suitable for example for machines designed to machine elongated beam-shaped (such as chair legs) or shell-shaped workpieces.

### Objects and summary of the invention

An object of the present invention is to provide a numerically controlled machining centre or machine tool which makes it possible to obtain easy and efficient adjustment or regulation of the workpiece clamping members or of devices for assembly of the workpieces. This object is achieved with a machine according to claim 1.

In substance, according to a first aspect, there is provided a machining centre or machine tool, comprising: a tool head; at least one support for workpieces to be machined, the head and the support being movable with respect to each other along a plurality of numerically controlled axes of translation; and a control unit. According to a possible embodiment of the invention, the support is provided with a plurality of clamping members adjustable in variable positions with respect to the support along at least a first direction of adjustment and a second direction of adjustment, substantially parallel to a first numerically controlled axis of translation and to a second numerically controlled axis of translation respectively. Preferably, there are provided stop devices to fasten the clamping members in the desired position along said first and second direction of adjustment. Moreover, to perform adjustment along the first direction a temporary constraining element associated with a load bearing structure is advantageously provided to temporarily constrain the clamping members to the structure; the clamping members being configured to be temporarily constrained to said constraining element. To perform adjustment of the clamping members along the second direction of adjustment, according to a possible embodiment of the invention there is advantageously provided a stop element with which the clamping members cooperate individually. The structure with which the temporary constraining element is associated and the support are reciprocally movable with a numerically controlled movement to adjust said clamping members along said first direction of adjustment, while the stop element and the support are reciprocally movable with a numerically controlled movement to adjust said clamping members along the second direction of adjustment.

Advantageously, the distance of said clamping members with respect to the corresponding support is adjusted along the second direction of adjustment. This allows adjustment of the height at which the various clamping members can be fixed to clamp a workpiece even of complex shape.

Although a fixed workpiece support can be provided, according to a preferred embodiment of the invention the support for workpieces to be machined is movable along at least one numerically controlled axis of translation. This axis can advantageously be parallel to the first direction along which adjustment of the clamping members takes place, while the second direction of adjustment can be orthogonal to this numerically controlled axis.

To avoid the use of additional position transducers or sensors, for adjustment of the position of the clamping members, the control unit of the machining centre can store the positions of these clamping members in its memory each time they are moved and adjusted. Alternatively, before each new adjustment the clamping members can be positioned in a zero position.

To simplify and make the adjustment operation of the clamping members particularly reliable, according to an advantageous embodiment of the invention the control unit can be programmed to perform adjustment of the clamping members along the first direction of adjustment (if necessary preceded by resetting the position of said members) and subsequently along the second direction of adjustment.

According to an advantageous embodiment of the invention, the first direction of adjustment is substantially horizontal and the second direction of adjustment is substantially vertical.

In a possible embodiment of the invention the support is oscillating or rotating about a substantially horizontal axis of oscillation and the first direction of adjustment can be substantially parallel to said axis of oscillation. Vice versa, the second direction of adjustment can be substantially orthogonal to said axis of oscillation. By means of rotation or oscillation of the support about said axis of oscillation the second direction of adjustment can be taken alternatively to a horizontal or vertical position.

The adjustment movements can be performed using, for example, two of the numerically controlled axes provided on the machining centre for machining workpieces, avoiding the need to adopt additional numerically controlled axes with respect to those used to perform machining.

According to an advantageous embodiment of the invention, there is provided a machining centre or machine tool, comprising: a tool head; at least one support for workpieces to be machined, the head and the support being movable with respect to each other along a plurality of numerically controlled axes of translation; and a control unit. Characteristically, according to the invention the support is provided with a plurality of clamping members adjustable in variable positions with respect to the support along at least a first direction of adjustment and a second direction of adjustment, substantially parallel respectively to a first of said numerically controlled axes of translation and to a second of said numerically controlled axes of translation. Moreover, the distance of said clamping members with respect to the relative support is adjusted along the second direction of adjustment.

Further advantageous characteristics and embodiments of the machining centre according to the invention are indicated in the appended claims and will be described in greater detail hereunder with reference to some indicative and non-limiting examples of embodiment of the invention.

### Brief description of the drawings

The invention will be better understood by following the description and accompanying drawing, which shows practical non-limiting embodiments of the invention. More specifically, in the drawing:
Figure 1 shows a front view of a machining centre or machine tool in a first embodiment of the invention;
Figure 2 shows a plan view according to II-II in Figure 1;
Figure 3 shows a side view according to III-III in Figure 1;
Figure 4 shows a side view of a machining centre according to the invention in a different embodiment;
Figure 5 shows a plan view according to V-V in Figure 4;
Figure 6 shows a side view of a modified embodiment of a machining centre according to the invention;
Figure 7 shows a plan view according to VII-VII in Figure 6; and
Figure 8 shows a side view of a further embodiment of the invention.

### Detailed description of examples of embodiment of the invention

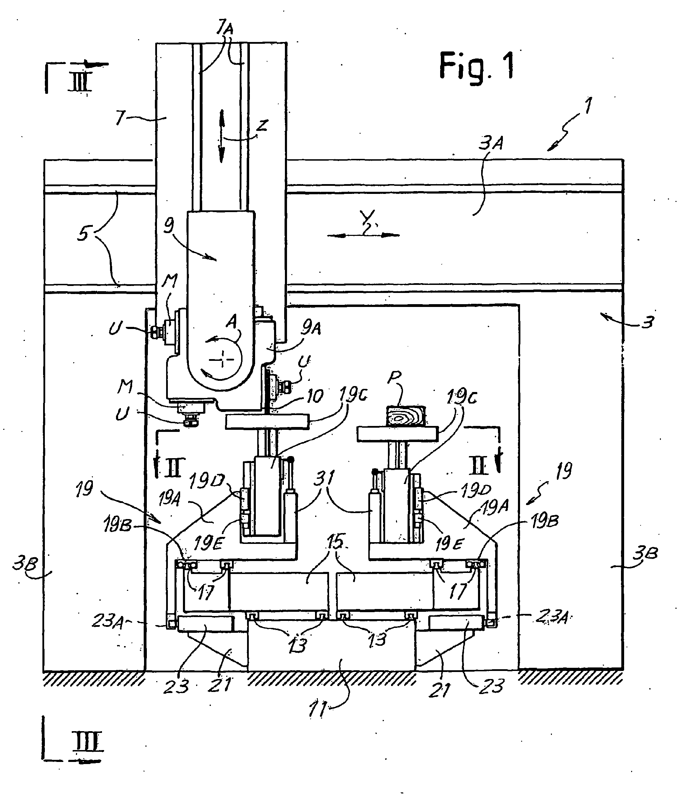

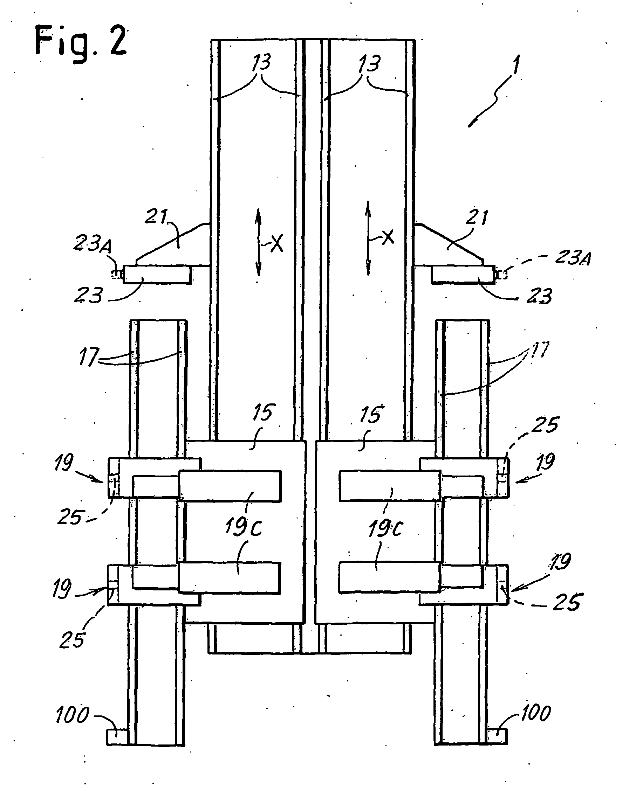

With initial reference to Figures 1 to 3, a machining centre according to the invention will firstly be described, which has a gantry structure and wherein the clamping members of the workpieces to be machined are adjustable according to two distinct directions of adjustment, one substantially vertical, the other substantially horizontal.

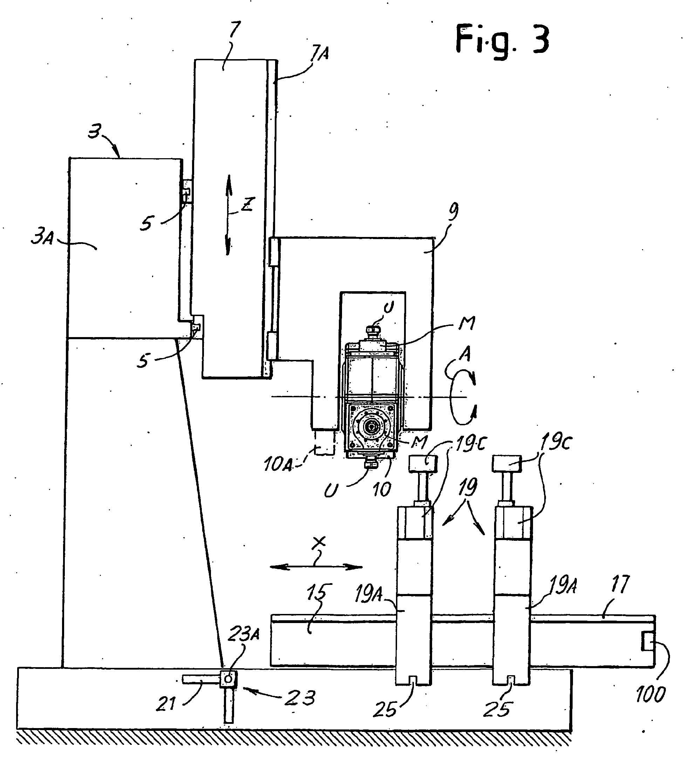

In this embodiment, the machining centre, indicated as a whole with 1, has a gantry 3 with uprights 3B and a horizontal cross member 3A, along which there are disposed guides 5 for translation of a slide 7 carrying a machining head, i.e. a tool head 9. The tools are indicated by way of example with U and are arranged on four electro spindles carried by the head. The assembly of the four spindles (indicated with M in Figure 3) rotates about a horizontal axis of rotation or oscillation A. The movement about this axis is controlled by a programmable control unit; therefore, this is a numerically controlled axis.

Through the gantry 3, between the uprights 3B and below the cross member 3A, there extends a base 11 on which there are provided two substantially parallel horizontal guides 13, sliding along which are two slides 15 forming supports for the workpieces. The workpieces can be represented for example by elongated elements of chairs or other furniture components. One of these possible workpieces to be machined is indicated with P in Figure 1. Each support 15 can move independently from the other along an axis X which forms a first numerically controlled axis of translation of the machining centre 1. The letters Y and Z indicate a second numerically controlled axis of translation and a third numerically controlled axis of translation. The axes X, Y and Z are substantially orthogonal to one another. The movement on the Y axis is allocated to the head 9 and more precisely to the slide 7 that carries it, movable along the horizontal guide 5 on the cross member 3A. The movement along the vertical axis of translation Z is provided by the head 9 which translates for this purpose on guides 7A provided on the slide 7.

To each of the supports 15 there is rigidly constrained a further substantially horizontal guide 17 having a direction approximately parallel to the guides 13 and consequently parallel to the numerically controlled axis X. On the guides 17 of each support 15 two clamping members 19 can be positioned for clamping the workpiece to be machined. Each clamping member 19 comprises (see in particular Figure 1) a carriage 19A engaged by means of shoes on the guides 17 and having a brake, indicated schematically with 19B, to lock the respective carriage 19A, and consequently the clamping member 19, in a specific position with respect to the guides 17 and consequently to the support 15. During machining of the workpieces the clamping members 19 are held in a pre-established fixed position by activating the brake 19B. The position along the guide 17 of the single clamping members 19 is determined by the shape of the workpiece P to be machined.

This position is adjusted at the start of machining a specific production batch using part of the numerically controlled axes with which the machining centre 1 is provided to perform the chip-removal machining operations on workpieces P. More specifically, adjustment along the guides 17 of the members 19 is performed by making use of the numerically controlled axis X of each of the supports 15. For this purpose, on each side of the base 11 a bracket 21 is fastened, integral with which is a piston-cylinder actuator 23 which forms a temporary constraining element between the load bearing structure formed of the base 11 and one or other of the clamping members 19 disposed on one or other of the guides 17. Constraint is obtained through cooperation between the rod 23A of the piston-cylinder actuator 23 and an element complementary to the rod 23A represented, in this embodiment, by a notch, seat or groove 25 produced on each of the carriages 19A.

In practice, by taking, by translation of the support 15, one or other of the clamping members 19 to the level of the temporary constraining element 23, making the rod 23A of the piston-cylinder actuator 23 penetrate the seat or notch 25, a temporary constraint is obtained between the carriage 19A of the clamping member 19 and the structure carrying the temporary constraining element 23, in this case formed of the base 11. By releasing the brake 19B it is then possible to adjust the position of the clamping member 19 constrained to the temporary constraining element 23 simply by translating the support 15 along the numerically controlled axis X, which will move with respect to the carriage 19A, held still with respect to the base 11. Upon reaching the desired position of the carriage 19A on the respective guide 17, the brake 19B is once again activated to fix this position and the temporary constraining element 23 is deactivated by withdrawing the rod 23A of the piston-cylinder actuator. In this way the clamping member 19 is once again integral with the support 15 having taken, with respect thereto, the new position fixed by the previous adjustment step.

It must be understood that the arrangement of the elements 25, 23 and 23A can be inverted, in the sense that the temporary constraining element integral with the base 11 can be formed of a hole, a notch, a seat or another element analogous to the one indicated with 25, while each of the clamping members 19 carries (in place of the notch 25) an actuator analogous to the one indicated with 23.

From the above it is understood that each of the clamping members 19 (two for each support 15 in the example illustrated) can be adjusted in position with respect to the support 15 using the same numerical control (X axis) with which the machining centre is provided to perform machining of the workpieces. The control unit can store each time the position of the support 15 and of the clamping member 19 with respect to said support so that it is able to perform, before machining of the subsequent batch, the necessary adjustment of the clamping members 19 with the procedure described above.

In the embodiment of the invention shown in Figures 1 to 3 there is also provided a further possible adjustment, in a vertical direction (substantially parallel to the numerically controlled axis Z) of each of the clamping members 19. For this purpose the head 9 has a stop 10 (Figure 1) integral in this example of embodiment with the element or casing 9A bearing the spindles M and rotating about the numerically controlled axis A. This stop is used to perform positioning, i.e. adjustment in the direction Z of each single clamping member 19. According to an advantageous embodiment, this adjustment is performed in succession, i.e. in sequence with respect to adjustment along the axis X of the respective clamping member 19 with respect to the support 15.

In other words, at each machining cycle of a new batch there is first performed adjustment, i.e. positioning of the single clamping members 19 along the guides 17 using the relative temporary constraining element 23. After performing this positioning and storing the relative positions of each of the supports 15 on the one side and clamping members 19 on the other, by means of translation along the axis X of the support 15 each clamping member 19 is carried under the head 9 which has been or is positioned angularly about the numerically controlled axis A to place the stop 10 facing downwards, as shown in Figure 1. After reaching this position it is possible to proceed in one of the modes described below.

According to a first operating mode, the head 9 is carried to a known position along the axis Z and, by means of a piston-cylinder actuator 31 with which each of the clamping members 19 is provided, the vertically movable part indicated with 19C of said clamping member 19 is raised, if necessary until it comes into contact with the stop 10 of the head 9, or in any case to a maximum pre-established height, which can be a height of zero. Having reached this position, the head 9 is gradually lowered, with a numerically controlled movement along the axis Z, pushing the part 19C downwards, acting thereon by means of the stop 10, until the stop 10 reaches the height at which the upper part 19C of the clamping member 19 is to be carried and clamped. The lowering movement of the part 19C can be suitably opposed (to maintain contact with the stop 10), for example by maintaining the piston-cylinder actuator 31 under slight back pressure. The movement is guided along guides indicated schematically with 19D in this embodiment.

After reaching this position, said position is fixed by activating a brake 19E with which the vertically movable part 19C of the clamping member 19 is provided (see Figure 1).

According to a different method of adjustment it is possible in the first place to lower, by means of the piston-cylinder actuator 31, the vertically movable part 19C of the clamping member 19, then take the stop 10 to the desired height by numerically controlled translation along the axis Z of the head 9. After clamping the head in this position, the part 19C is raised by means of the piston-cylinder actuator 31 with a movement guided along the relative slide-guide system 19D, until reaching the stop 10. Having reached this position the brake 19E is locked to fix the position reached.

In any case, by means of the numerically controlled axis Z with which the machining centre 1 is provided to perform the normal machining operations to remove chips, it is possible to adjust the vertical position of each of the clamping members 19, separately from each other. For this purpose the stop 10 is provided with shape and dimensions that allow it to act individually on each of the clamping members 19 (or more precisely on the movable part 19C thereof) without interfering with the others.

Rather than on the spindle element or casing 9A, the stop 10 could also be carried in another position, for example by the head or fork 9 as indicated by the dashed line in Figure 3 and with the reference 10A. In a modified embodiment, the stop 10 can be carried by one or by the other of the spindles M.

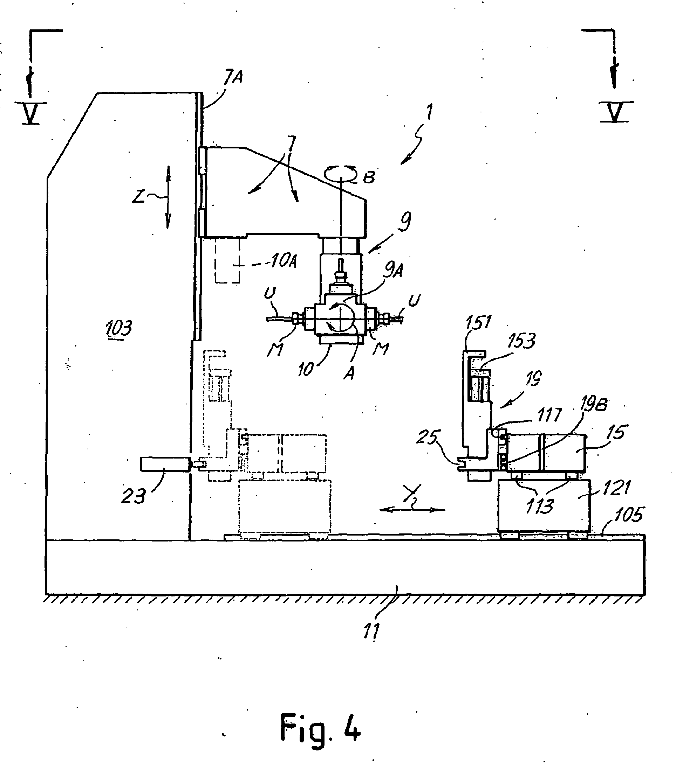

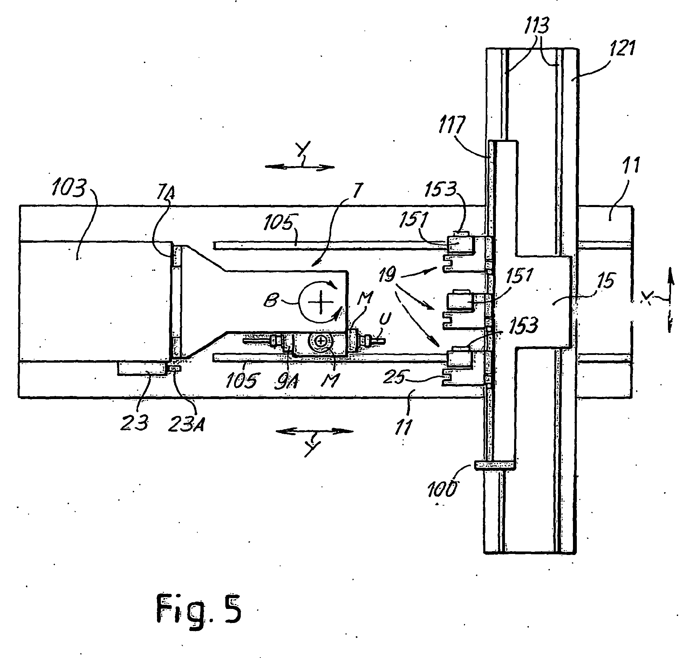

Figures 4 and 5 show an embodiment of the invention in a machining centre with a fixed upright. In this embodiment the machining centre 1 has a fixed horizontal base 11, to which a fixed upright 103 is fastened. It would also be possible for the two elements 11 and 103 to be fixed to a common floor but not constrained directly to each other.

On the upright 103 there are provided guides 7A for sliding of a carriage or slide 7 carrying a head 9, which in this embodiment is formed of a double rotating head, i.e. provided with a movement of oscillation and/or rotation about two distinct numerically controlled axes indicated with A and B. It must be noted that for the purposes of adjustment of the clamping members 19 the head could have a single axis of rotation or oscillation, i.e. could be a single rotating head.

The head 9 in practice has an element 9A rotating about the numerically controlled axis A, in turn supported by a component rotating about the vertical axis B. In this embodiment the element 9A carries the same number of spindles M as there are tools U, although it would also be possible to provide a different number of tools and spindles, as is the case in the example of embodiment shown in the previous Figures 1 to 3. In general, the tools U can be interchangeable and for this purpose the machining centre can have a tool magazine and tool-chariging members known per se and not shown.

The base 11 is provided with guides 105 which extend along a direction substantially coincident with a numerically controlled axis Y along which a carriage or side 121 moves guided on the guides 105. This carriage or slide 121 is provided with guides 113 for a support 15 which, together with the carriage or slide 121, forms a cross arrangement of slides or carriages, i.e. movable along numerically controlled axes X and Y substantially orthogonal to each other, the axis X being substantially parallel to the guides 113.

The support 15 is provided with sliding guides 117 for a plurality of clamping members 19 (three in the example shown in the drawing). Each clamping element or member 19 has a seat, in the form of a notch, hole or the like, indicated with 25, inside which there can be inserted the end of a rod 23A of a piston-cylinder actuator 23 constrained to the upright 105 and forming a temporary constraining element between the structure formed of the upright 103 and one or other of the clamping members 19.

In this embodiment each clamping member 19 has two vertically movable elements indicated with 151 (upper element) and 153 (lower element). The workpiece to be machined is clamped by means of one or more of the clamping members 19 placing it between the elements 151 and 153, which are then closed by moving them reciprocally towards each other and holding therebetween the workpiece to the machined. According to the type of machining to perform one or other of the elements 151, 153 can serve as a surface of reference and therefore remains fixed in a predetermined position, or is always returned to this position, while the other of the two elements 151, 153 is movable as a result of a piston-cylinder actuator (not shown) to clamp the workpiece. This clamping carries the workpiece to abut against the element 151, 153 which serves each time as surface of reference. This arrangement of the clamping elements 151, 153 is known per se.

Adjustment of the clamping members 19 along the first direction of adjustment represented by the guides 117 is performed as follows. The carriage or slide 121 is translated along the numerically controlled axis Y to reach the position indicated with the dashed line in Figure 4. Before, during or after this movement along the axis Y, the support 15 is translated along the numerically controlled axis X until the clamping member 19 that is to be positioned, i.e. adjusted along the guides 117, is in front of the temporary constraining element 23. In this way with a sequence of operations it is possible to engage first one and then the other of the clamping members 19, making the end 23A of the rod of the piston-cylinder actuator 23 penetrate the corresponding seat 25 of the clamping member 19. As in the embodiment in Figures 1 to 3 each clamping member 19 is provided with a brake 19B which is released, i.e. deactivated, when adjustment of the clamping member 19 requires to be performed. Preferably, the brake is released after, with a combined movement along X and along Y, the clamping member 19 to be adjusted has been carried between the structure shared by the upright 103 and the clamping member 19, with the seat 25 engaged with the end 23A of the rod of the piston cylinder actuator 23 forming the temporary constraining element. After this position has been reached and the brake 19B released, the support can translate by means of a numerically controlled movement along the axis X to reach the desired reciprocal position between the support 15 and the clamping member 19. At this point the brake 19B is again activated to fix the reciprocal position reached. The operation is repeated for each of the clamping members 19 to be adjusted along the direction parallel to the numerically controlled axis X, i.e. along the guide 117.

Vertical adjustment, i.e. parallel to the numerically controlled axis Z, is performed by an operation similar to the one described with reference to Figures 1 to 3 and subsequent to the adjustment operation, i.e. to position the clamping elements or members 19 along the axis X and the guides 117.

For this purpose, with a movement of the carriage or slide 121 according to the numerically controlled axis Y along the guides 105, each clamping member 19 to be positioned or adjusted in the direction Z is carried under the head 9 and by means of a reciprocal movement between the head and one or other of the elements 151, 153, with a procedure similar to the one described previously with reference to Figures 1 to 3, the vertical position of the clamping member 19 is adjusted.

In practice, either one or other of the elements 151, 153, can be adjustable vertically and clamped in the desired position with respect to the support 15. For this purpose two piston-cylinder actuators, or other types of actuators, associated with one and with the other of the elements 151, 153 and sliding guides for the latter, not shown, are sufficient.

According to the type of adjustment required (i.e. according to which of the two elements 151, 153 must be carried to a pre-established vertical adjustment position), the head 9 (or more precisely a stop integral therewith and indicated schematically with 10 in Figure 4, indicated here as integral with the spindle casing 9A) is carried to cooperate with one or other of the elements 151, 153, with a procedure analogous to the one described above for the elements 19C in Figure 1. Alternatively, the stop 10 can be carried by the slide 7, as indicated with a dashed line and with the reference 10A in Figure 4.

Also in this case the arrangement of the elements 25 and 23, 23A can be inverted, i.e. an actuator can be provided on each of the clamping members 19 and a fixed element on the upright 103. However, the embodiment shown with a single actuator 23 is preferable for obvious reasons of cost. The piston-cylinder actuator 23 and the respective rod 23A could also be replaced by a fixed rod, as the reciprocal engaging movement between the temporary constraining element 23 and the seat 25 is obtained with the numerically controlled movement along the axis Y of the carriage 121.

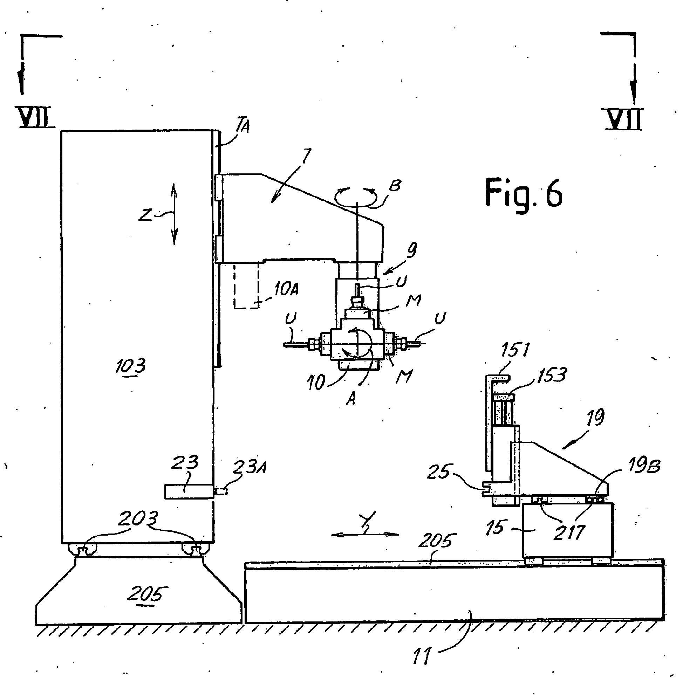

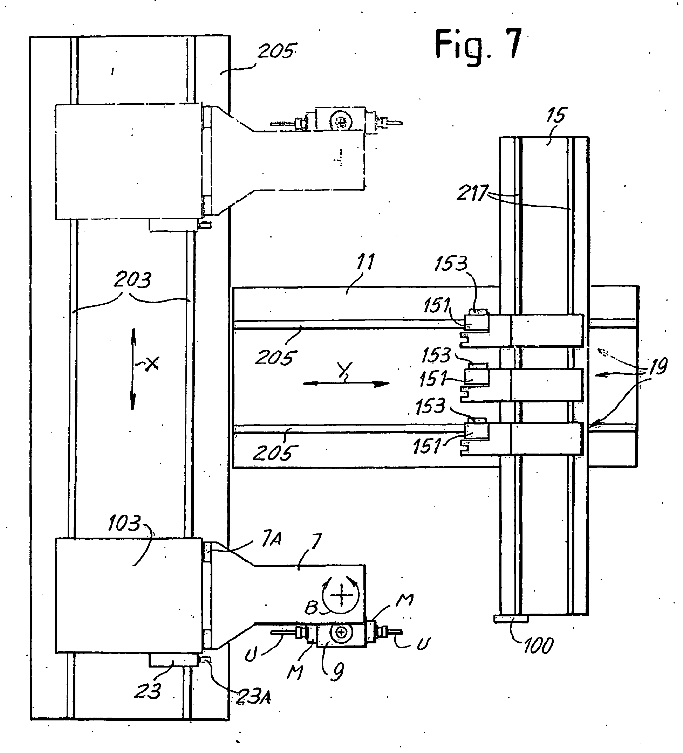

The embodiment in Figures 6 and 7 shows a machining centre similar to the one shown in Figures 4 and 5. The same numbers indicate the same or equivalent parts to those in the embodiment in Figures 4 and 5. In Figures 6 and 7 however, the upright 103 is not fixed with respect to the base 11, but movable along a numerically controlled axis X, which replaces the numerically controlled axis X in Figures 4 and 5, along which in that case the support 15 was translatable along the guides 113 integral with the carriage or slide 121.

Vice versa, in the embodiment in Figures 6 and 7, the support 15 on which the clamping members 19 are mounted is provided with a single numerically controlled movement along the horizontal axis Y, the numerically controlled translational movement along the axis X being entrusted, as said, to the upright 103.

On the upright 103 there are again provided guides 7A for the slide or carriage 7 carrying the head 9, again rotating about two numerically controlled axes of rotation or oscillation A and B. The number 9A indicates the element carrying the spindles M for the tools U.

The clamping members 19 have a shape substantially equivalent to that of the clamping elements or members 19 in Figures 4 and 5.

Adjustment of the single clamping members 19 along the guides 217 parallel to the numerically controlled axis X takes place as follows. The upright 103 is taken approximately to the position of the base 11 and the support 15 is translated according to the axis Y towards the upright 103 until the seat 25 of the clamping member 19 to be adjusted engages with the rod 23A of the piston-cylinder actuator forming the temporary constraining element carried by the structure represented in this case by the moving upright 103. Having reached this position of reciprocal engagement the upright 23 is translated with a numerically controlled movement along the axis X guided by the guides 203 integral with a fixed base 205.

Also in this case the adjustment operation takes place for each clamping element or member 19 by releasing, i.e. deactivating, the brake F, reciprocally translating the clamping element or member 19 with respect to the support 15 and again activating the brake 19B when the desired position has been reached. After this adjustment has been performed along the first direction of adjustment substantially parallel to the numerically controlled axis X, adjustment of one or other or both of the vertical elements 151, 153 is performed, in the manner described above, using the numerically controlled movement of the head 9 along the vertical axis of translation Z. Adjustment in vertical direction (Z) takes place with the aid of a stop 10 again integral with the spindle casing or element 9A, or with the slide 7 (stop 10A indicated with a dashed line in Figure 6).

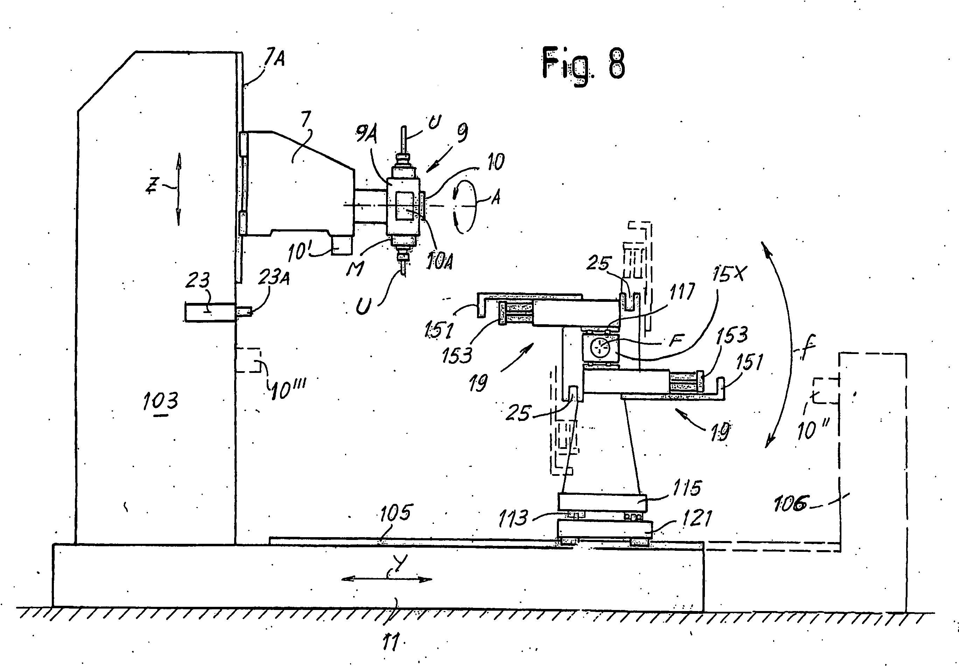

Figure 8 shows, in a side view, a modified embodiment of the machining centre in Figures 4 and 5. The same numbers indicate the same or equivalent parts to those in Figures 4 and 5. In this case the support 115 supports two series of clamping elements 19 opposed and mounted on an element or support 15X rotating or oscillating about a horizontal axis F, substantially parallel to the axis X and supported by the support 115. The letter f indicates the oscillating movement through 180° which can switch the reciprocal position of the two series of clamping elements or members 19 mounted in an axially symmetrical manner about the horizontal axis F.

To adjust the position of each clamping member 19 with respect to the support or element 15X and to the support 115 it is possible to rotate the element 15X about the axis F to a position rotated through +/- 90° with respect to the position shown in Figure 8 to place one or other of the groups of clamping members 19 in the same position as the clamping members 19 in Figure 4 with respect to the upright 103 and to the temporary constraining element 23, i.e. with the seat 25 oriented towards the latter. In this position it is possible to perform adjustment of the respective clamping members 19 along the axis X with the procedure described above. Alternatively, it would also be possible to place the seat 25 on the element 151, thereby performing this first adjustment with the clamping members 19 in the horizontal position, i.e. in the angular position shown with a solid line in Figure 8.

Adjustment of the elements 151 and/or 153 of one or other of the two series of clamping members 19 mounted in axial-symmetrical position on the support 15 along the axis X takes place with the same methods as those described above by using the head 9 which is provided for this purpose with a stop 10 making use of the movement along the axis Y instead of along the axis Z. However, adjustment does not take place according to a vertical axis but preferably according to a horizontal axis Y, arranging the clamping members 19 in the position indicated with a solid line in Figure 8 or in the position rotated through 180° with respect to the one shown, according to which group of members 19 is to be adjusted.

Alternatively, adjustment of the elements 151, 153 can take place arranging the clamping members 19 rotated through +/-90° in the position indicated with a dashed line in Figure 8, and using a stop in position 10A on the head 9 or on the spindle casing 9A, which will be rotated for this purpose through 90° about the axis A of rotation. Alternatively, a stop carried by the slide 7 and indicated with 10' can be used.

If adjustment of the elements 151, 153 takes place with the support in the position shown with a solid line in Figure 8, instead of the stop 10 carried by the spindle casing 9A, there can be used a stop 10"' integral with the upright 103, or a stop 10" integral with a fixed structure 104, which could be part of a loader positioned at the opposite end of the base 10 with respect to the upright 103.

As in the previously described examples, also in this case adjustment of the clamping members 19 along the horizontal guides 117 parallel to the axis X is performed first, so that the control unit of the machining centre 1 knows the position of the clamping members 19 along this axis or more specifically the position of the support 15 and the position of the clamping members 19 with respect to the support 15. After performing this first adjustment, the second adjustment orthogonal to the axis X is performed by making one and/or the other of the elements 151, 153 of each clamping member interact with the stop 10 or with the stop 10A of the head 9.

It is understood that the drawing only shows an example provided by way of a practical arrangement of the invention, which can vary in forms and arrangements without however departing from the scope of the concept underlying the invention. Any reference numbers in the appended claims are provided to facilitate reading of the claims with reference to the description and to the drawing, and do not limit the scope of protection represented by the claims.

## Claims

1. A machining centre or machine tool, comprising: a tool head (9); at least one support (15; 15X) for workpieces (P) to be machined, the head and the support being movable with respect to each other along a plurality of numerically controlled axes of translation (X, Y, Z); and a control unit; wherein; said at least one support is provided with a plurality of clamping members (19) adjustable in variable positions with respect to the support (15; 15X) along at least a first direction of adjustment and a second direction of adjustment, which are parallel respectively to a first of said numerically controlled axes of translation and to a second of said numerically controlled axes of translation; **characterised in that:** the distance of said clamping members (19) with respect to the relative support (15; 15X) is adjusted along said second direction of adjustment; a stop element (10; 10A; 10'; 10") is provided to adjust said clamping members (19) along said second direction of adjustment, the relative movement between said stop element (10; 10A; 10'; 10") and the support (15; 15X) causing adjustment of the clamping members (19) along said second direction of adjustment; said stop element (10; 10A; 10'; 10") and the support (15; 15X) are reciprocally movable with a numerically controlled movement to adjust said clamping members (19) along the second direction of adjustment.

2. Machining centre or machine tool as claimed in claim 1, wherein a temporary constraining element (23) associated with a load bearing structure (11; 103) is provided to temporarily constrain said clamping members (19) to said structure, said clamping members being configured to be temporarily constrained to said constraining element; the relative movement between the load bearing structure and the support (15; 15X) causing adjustment of the clamping members along said first direction of adjustment.

3. Machining centre or machine tool as claimed in claim 1 or 2, wherein said clamping members (19) cooperate individually with said stop element (10; 10A; 10'; 10").

4. Machining centre or machine tool, according to claim 1, 2 or 3, wherein stop devices (19E) are provided to fasten said clamping members (19) in the desired position along said first and second direction of adjustment.

5. Machining centre or machine tool as claimed in any one of the previous claims, wherein said at least one support (15; 15X) of the workpieces (P) to be machined is movable along at least one of said numerically controlled axes of translation (X, Y, Z).

6. Machining centre or machine tool as claimed in any one of the previous claims, wherein said clamping members (19) have a zero position with respect to said support (15; 15X), adjustment along said first direction of adjustment being preceded by positioning of the clamping members (19) in said zero position.

7. Machining centre or machine tool as claimed in any one of the previous claims, wherein said control unit is programmed to perform adjustment of the clamping members (19) firstly along said first direction of adjustment and subsequently along said second direction of adjustment.

8. Machining centre or machine tool as claimed in any one of the previous claims, wherein said first direction of adjustment is substantially horizontal and said second direction of adjustment is substantially vertical.

9. Machining centre or machine tool as claimed in any one of the previous claims, wherein said at least one support (15X) is oscillating or rotating about a substantially horizontal axis of oscillation (F).

10. Machining centre or machine tool as claimed in claim 10, wherein said first direction of adjustment is substantially parallel to said axis of oscillation (F).

11. Machining centre or machine tool as claimed in claim 9 or 10, wherein said second direction of adjustment is substantially orthogonal to said axis of oscillation (F).

12. Machining centre or machine tool as claimed in any one of claims 9 to 11, wherein by means of rotation or oscillation of the support (15X) about said axis of oscillation (F) the second direction of adjustment is alternatively taken to a horizontal or vertical position.

13. Machining centre or machine tool as claimed in claim 12, wherein positioning of the clamping members (19) along said second direction of adjustment is performed with said direction of adjustment in horizontal position.

14. Machining centre or machine tool as claimed in claim 12, wherein positioning of the clamping members (19) along said second direction of adjustment is performed with said direction of adjustment in horizontal position.

15. Machining centre or machine tool as claimed in any one of the previous claims, wherein the numerically controlled reciprocal movements to adjust the clamping members (19) are controlled by the same numerically controlled axes which are provided on the machining centre or machine tool for performing the machining of workpieces.

16. Machining centre or machine tool as claimed in any one of the previous claims, wherein positioning of the clamping members (19) takes place using of the same sensors or transducers employed for machining of the workpieces.

17. Machining centre or machine tool as claimed in any one of the previous claims, wherein said stop element (10) for adjusting the clamping members (19) along said second direction is constrained to the head (9).

18. Machining centre or machine tool as claimed in claim 17, wherein said stop element (10') is integral with a slide (7) carrying the head (9).

19. Machining centre or machine tool as claimed in claim 17, wherein said stop element (10) is integral with a spindle casing of the head (9).

20. Machining centre or machine tool as claimed in claim 17, wherein said stop element (10"') is integral with an upright (103) on which the head (9) is supported.

21. Machining centre or machine tool as claimed in claim 17, wherein said stop element (10") is integral with a fixed structure (106).

22. Machining centre or machine tool as claimed in claim 20 or 21, wherein said support (15; 15X) is movable along a numerically controlled axis (X) to move towards or away from said stop element (10", 10"').

23. Machining centre or machine tool as claimed in any one of the previous claims, wherein at least some of said supports (15, 15X) comprise two elements reciprocally movable with respect to each other.

24. Machining centre or machine tool as claimed in claim 23, wherein said reciprocally movable elements are alternatively positionable along said second direction of adjustment.

25. Machining centre or machine tool as claimed in any one of the previous claims, wherein said head (9) is movable along at least a second numerically controlled axis (X, Z).

26. Machining centre or machine tool as claimed in any one of the previous claims, wherein said first direction of adjustment is parallel to a numerically controlled axis (Y) of translation of said support (15).

27. Machining centre or machine tool as claimed in any one of the previous claims, wherein said head (9) is provided with a movement according to at least one numerically controlled axis with respect to said temporary constraining element (23).

28. Machining centre or machine tool as claimed in claim 27, wherein said head (29) is provided with a numerically controlled translational movement with respect to the structure carrying the temporary constraining element (23).

29. Machining centre or machine tool as claimed in any one of the previous claims, wherein said support (15) is movable along said first numerically controlled axis, to move reciprocally towards and away from said clamping members (19) and said temporary constraining element (23).

30. Machining centre or machine tool as claimed in claim 29, wherein said structure with which the temporary constraining element (23) is associated is an upright (103), on which said head (9) is supported and wherein said at least one support (15) and said upright (103) are provided with a reciprocal movement towards and away from each other.

31. Machining centre or machine tool as claimed in claim 30, wherein said reciprocal movement towards and away from each other is a numerically controlled movement along a numerically controlled axis.

32. Machining centre or machine tool as claimed in claim 30 or 32, wherein said head (9) is provided with at least one translational movement according to a numerically controlled axis along said upright (103).

33. Machining centre or machine tool as claimed in claim 30, 31 or 32, wherein said upright (103) is carried by a fixed base (11) and said support (15) is provided with a first movement towards and away from said upright (103) and with a second translational movement substantially parallel to said direction of adjustment.

34. Machining centre or machine tool as claimed in any one of claims 31 to 33, wherein said upright (103) is movable along a numerically controlled axis of translation (X) and wherein said first direction of adjustment is parallel to said axis of translation along which the upright is movable.

35. Machining centre or machine tool as claimed in any one of the previous claims, wherein said support (15) is movable along a first guide (13; 113; 205) parallel to a numerically controlled axis of translation (Y) of said support (15) and to said first direction of adjustment, and wherein a second guide (17; 117) substantial parallel to said first guide and along which said clamping members are adjustable is constrained to said support.

36. Machining centre or machine tool as claimed in claim 35, wherein said first guide (13) is carried by the structure (11, 21) with which said temporary constraining element (23) is associated.

37. Machining centre or machine tool as claimed in claim 35, wherein said structure with which said temporary constraining element is associated is integral with a base with which said first guide is integral.

38. Machining centre or machine tool as claimed in claim 35, wherein said first guide (113) is provided on a carriage (121) movable along a third guide (105) not parallel to the first guide (113) and to the second guide (117), to allow the clamping members (19) to move towards and away from the load bearing structure (103) with which said temporary constraining element (23) is associated.

39. Machining centre or machine tool as claimed in claim 38, wherein said third guide (105) and said first guide (113) are oriented at approximately 90° with respect to each other and parallel to two numerically controlled axes of translation.

40. Machining centre or machine tool as claimed in claim 38 or 39, wherein said third guide (105) is arranged on a base associated (11) with an upright (103) on which said head (9) is arranged, the upright carrying said temporary constraining element (23) and the clamping members (19) being selectively moved towards the temporary constraining element (23) by means of a movement of said carriage (121) along said third guide (105) and being adjusted along the direction of adjustment by means of a movement of the support along said first guide, the movements along the first and the third guide being numerically controlled movements.

41. Machining centre or machine tool as claimed in any one of the previous claims, comprising a gantry (3A, 3B) on which said head is mounted (9).

42. Machining centre or machine tool as claimed in claim 41, wherein under said gantry there extends a fixed structure (11) carrying said temporary constraining element (23) and with which a sliding guide (13) of said at least one support (15) is associated, the movement of the support along said guide being a numerically controlled movement; and wherein said support is provided with an adjustment guide (17) parallel to said sliding guide (13) and on which said clamping members (19) are adjustable.

43. Machining centre or machine tool as claimed in any one of the previous claims, wherein said control unit of the movements along the numerically controlled axes is programmed to memorize the positions of said clamping members and to perform adjustment and/or positioning of the clamping members on the basis of memorized information relative to the position of said clamping members.

44. Machining centre or machine tool as claimed in any one of the previous claims, wherein during machining of the workpieces said second direction of adjustment is oriented substantially vertically.

## Patentansprüche

1. Maschinenzentrum oder Werkzeugmaschine mit: einem Werkzeugkopf (9); zumindest einem Träger (15, 15X) für zu bearbeitende Werkstücke (P), wobei der Kopf und der Träger mit Bezug aufeinander entlang einer Anzahl von numerisch gesteuerten Translationsachsen (X, Y, Z) bewegbar sind, und einer Steuereinheit, wobei zumindest ein Träger mit einer Anzahl von Klemmelementen (19) versehen ist, die in verschiedenen Positionen mit Bezug auf den Träger (15, 15X) entlang zumindest einer ersten Einstellrichtung und einer zweiten Einstellrichtung einstellbar sind, die jeweils parallel zu einer ersten der numerisch gesteuerten Translationsachse und einer zweiten der numerisch gesteuerten Translationsachse sind, **dadurch gekennzeichnet, dass** der Abstand der Klemmelemente (19) mit Bezug auf den jeweiligen Träger (15, 15X) entlang der zweiten Einstellrichtung eingestellt wird, wobei ein Anschlagelement (10, 10A, 10', 10") vorgesehen ist, um die Klemmelemente (19) entlang der zweiten Einstellrichtung einzustellen, wobei die Relativbewegung zwischen dem Anschlagelement (10, 10A, 10',10") und dem Träger (15, 15X) eine Einstellung der Klemmelemente (19) entlang der zweiten Einstellrichtung verursacht, wobei das Anschlagelement (10, 10A, 10', 10") und der Träger (15, 15X) mit einer numerisch gesteuerten Bewegung hin und her bewegbar sind, um die Klemmelemente (19) entlang der zweiten Einstellrichtung einzustellen.

2. Maschinenzentrum oder Werkzeugmaschine nach Anspruch 1, wobei ein Temporärzwangselement (23), das einer Lastlagerstruktur (11, 103) zugeordnet ist, vorgesehen ist, um zeitweilig das Klemmelement (19) an die Struktur zu zwängen, wobei das Klemmelement ausgebildet ist, um zeitweilig an das Zwangselement gezwängt zu werden, wobei die Relativbewegung zwischen der Lastlagerstruktur und dem Träger (15, 15X) eine Einstellung des Klemmelementes entlang der ersten Einstellrichtung verursacht.

3. Maschinenzentrum oder Werkzeugmaschine nach Anspruch 1 oder 2, wobei das Klemmelement (19) individuell mit dem Anschlagelement (10, 10A, 10', 10") zusammen wirkt.

4. Maschinenzentrum oder Werkzeugmaschine nach Anspruch 1, 2 oder 3, wobei Anschlagvorrichtungen (19E) vorgesehen sind, um die Klemmelemente (19) in der gewünschten Position entlang der ersten und der zweiten Einstellrichtung festzustellen.

5. Maschinenzentrum oder Werkzeugmaschine nach einem der vorstehenden Ansprüche, wobei zumindest ein Träger (15, 15X) der zu bearbeitenden Werkstücke (P) entlang zumindest einer der numerisch gesteuerten Translationsachsen (X, Y, Z) bewegbar ist.

6. Maschinenzentrum oder Werkzeugmaschine nach einem der vorstehenden Ansprüche, wobei die Klemmelemente (19) eine Nullposition mit Bezug auf den Träger (15, 15X) aufweisen, wobei eine Positionierung der Klemmelemente (19) in der Nullposition der Einstellung entlang der ersten Einstellachse vorhergeht.

7. Maschinenzentrum oder Werkzeugmaschine nach einem der vorstehenden Ansprüche, wobei die Steuereinheit programmiert ist, zunächst eine Einstellung der Klemmelemente (19) entlang der ersten Einstellrichtung durchzuführen und dann entlang der zweiten Einstellrichtung.

8. Maschinenzentrum oder Werkzeugmaschine nach einem der vorstehenden Ansprüche, wobei die erste Einstellrichtung im Wesentlichen horizontal ist und die zweite Einstellrichtung im Wesentlichen vertikal.

9. Maschinenzentrum oder Werkzeugmaschine nach einem der vorstehenden Ansprüche, wobei zumindest ein Träger (15X) oszilliert oder um eine im Wesentlichen horizontale Oszillationsachse (F) rotiert.

10. Maschinenzentrum oder Werkzeugmaschine nach Anspruch 9, wobei die erste Einstellrichtung im Wesentlichen parallel zu der Oszillationsachse (F) ist.

11. Maschinenzentrum oder Werkzeugmaschine nach Anspruch 9 oder 10, wobei die zweite Einstellrichtung im wesentlichen orthogonal zu der Oszillationsachse (F) ist.

12. Maschinenzentrum oder Werkzeugmaschine nach einem der Ansprüche 9 bis 11, wobei mittels Drehung oder Oszillation des Trägers (15X) bezüglich der Oszillationsachse (F) die zweite Einstellrichtung alternativ in eine horizontale oder vertikale Position gebracht wird.

13. Maschinenzentrum oder Werkzeugmaschine nach Anspruch 12, wobei die Positionierung der Klemmelemente (19) entlang der zweiten Einstellrichtung mit der Einstellrichtung in horizontaler Position durchgeführt wird.

14. Maschinenzentrum oder Werkzeugmaschine nach Anspruch 12, wobei die Positionierung der Klemmelemente (19) entlang der zweiten Einstellrichtung mit der Einstellrichtung in horizontaler Position durchgeführt wird.

15. Maschinenzentrum oder Werkzeugmaschine nach einem der vorstehenden Ansprüche, wobei die numerisch gesteuerten Hin- und Herbewegungen zur Einstellung der Klemmelemente (19) durch dieselben numerisch gesteuerten Achsen gesteuert werden, die an dem Maschinenzentrum oder der Werkzeugmaschine zur Durchführung der Bearbeitung von Werkstücken vorgesehen sind.

16. Maschinenzentrum oder Werkzeugmaschine nach einem der vorstehenden Ansprüche, wobei die Positionierung der Klemmelemente (19) unter Verwendung der selben Sensoren oder Wandler vorgenommen wird, die zum Bearbeiten der Werkstücke verwendet werden.

17. Maschinenzentrum oder Werkzeugmaschine nach einem der vorstehenden Ansprüche, wobei das Anschlagelement (10) zum Einstellen der Klemmelemente (19) entlang der zweiten Richtung durch den Kopf (9) begrenzt wird.

18. Maschinenzentrum oder Werkzeugmaschine nach Anspruch 17, wobei das Anschlagelement (10') einstückig mit einem Schlitten (7), der den Kopf (9) trägt, ist.

19. Maschinenzentrum oder Werkzeugmaschine nach Anspruch 17, wobei das Anschlagelement (10) einstückig mit einem Spindelgehäuse des Kopfes (9) ist.

20. Maschinenzentrum oder Werkzeugmaschine nach Anspruch 17, wobei das Anschlagelement (10"') einstückig mit einem Ständer (103) ist, auf dem der Kopf (9) getragen wird.

21. Maschinenzentrum oder Werkzeugmaschine nach Anspruch 17, wobei das Anschlagelement (10") einstückig mit einer festen Struktur (106) ist.

22. Maschinenzentrum oder Werkzeugmaschine nach Anspruch 20 oder 21, wobei der Träger (15, 15X) bewegbar entlang einer numerisch gesteuerten Achse (X) ist, um sich zu dem Anschlagelement (10", 10"') hinzubewegen oder davon weg.

23. Maschinenzentrum oder Werkzeugmaschine nach einem der vorstehenden Ansprüche, wobei zumindest einige der Träger (15, 15X) zwei Elemente aufweisen, die sich mit Bezug aufeinander hin und her bewegen.

24. Maschinenzentrum oder Werkzeugmaschine nach Anspruch 23, wobei die hin und her bewegbaren Elemente abwechselnd entlang der zweiten Einstellrichtung positionierbar sind.

25. Maschinenzentrum oder Werkzeugmaschine nach einem der vorstehenden Ansprüche, wobei der Kopf (9) entlang zumindest einer zweiten numerisch gesteuerten Achse (X, Z) bewegbar ist.

26. Maschinenzentrum oder Werkzeugmaschine nach einem der vorstehenden Ansprüche, wobei die erste Einstellrichtung parallel zu einer numerisch gesteuerten Achse (Y) der Bewegung des Trägers (15) ist.

27. Maschinenzentrum oder Werkzeugmaschine nach einem der vorstehenden Ansprüche, wobei der Kopf (9) mit einer Bewegung entlang zumindest einer numerisch gesteuerten Achse mit Bezug auf das Temporärzwangselement (23) versehen ist.

28. Maschinenzentrum oder Werkzeugmaschine nach Anspruch 27, wobei der Kopf (29) mit einer numerisch gesteuerten Translationsbewegung mit Bezug auf die Struktur versehen ist, die das Temporärzwangselement (23) trägt.

29. Maschinenzentrum oder Werkzeugmaschine nach einem der vorstehenden Ansprüche, wobei der Träger (15) entlang der ersten numerisch gesteuerten Achse bewegbar ist, um sich auf das Klemmelement (19) und das Temporärzwangselement (23) hin und her gehend zu und weg zu bewegen.

30. Maschinenzentrum oder Werkzeugmaschine nach Anspruch 29, wobei die Struktur, der das Temporärzwangselement (23) zugeordnet ist, ein Ständer (103) ist, auf dem der Kopf (9) getragen wird, und wobei zumindest ein Träger (15) und der Ständer (103) mit einer hin und her gehenden Bewegung aufeinander zu und voneinander weg versehen sind.

31. Maschinenzentrum oder Werkzeugmaschine nach Anspruch 30, wobei die hin und hergehende Bewegung aufeinander zu und voneinander weg eine numerisch gesteuerte Bewegung entlang einer numerisch gesteuerten Achse ist.

32. Maschinenzentrum oder Werkzeugmaschine nach Anspruch 30 oder 31, wobei der Kopf (9) mit zumindest einer Translationsbewegung entlang einer numerisch gesteuerten Achse entlang des Ständers (103) versehen ist.

33. Maschinenzentrum oder Werkzeugmaschine nach Anspruch 30, 31 oder 32, wobei der Ständer (103) durch eine fixierte Basis (11) getragen wird und der Träger (15) mit einer ersten Bewegung auf den Ständer (103) zu und von ihm weg versehen ist und mit einer zweiten Translationsbewegung im Wesentlichen parallel zu der Einstellrichtung.

34. Maschinenzentrum oder Werkzeugmaschine nach einem der Ansprüche 31 bis 33, wobei der Ständer (103) entlang einer numerisch gesteuerten Translationsachse (X) versehen ist und wobei die erste Einstellrichtung parallel zu der Translationsachse ist, entlang der der Ständer bewegbar ist.

35. Maschinenzentrum oder Werkzeugmaschine nach einem der vorstehenden Ansprüche, wobei der Träger (15) entlang einer ersten Führung (13, 113, 205) parallel zu einer numerisch gesteuerten Translationsachse (Y) des Trägers (15) und zur ersten Einstellrichtung bewegbar ist und wobei eine zweite Führung (17, 117) im Wesentlichen parallel zu der ersten Führung ist und entlang der die Klemmelemente einstellbar sind an dem Träger befestigt sind.

36. Maschinenzentrum oder Werkzeugmaschine nach Anspruch 35, wobei die erste Führung (13) durch die Struktur (11, 21) getragen wird, der das Temporärzwangselement (23) zugeordnet ist.

37. Maschinenzentrum oder Werkzeugmaschine nach Anspruch 35, wobei die Struktur, der das Temporärzwangselement zugeordnet ist, einstückig mit einer Basis ist, mit der die erste Führung einstückig ist.

38. Maschinenzentrum oder Werkzeugmaschine nach Anspruch 35, wobei die erste Führung (113) auf einem Schlitten (121) vorgesehen ist, der entlang einer dritten Führung (105), die nicht parallel zu der ersten Führung und der zweiten Führung (117) ist, bewegbar ist, um es dem Klemmelement (19) zu ermöglichen, sich auf die Lastlagerstruktur (103), der das Temporärzwangselement (23) zugeordnet ist, zuzubewegen und sich davon zu entfernen.

39. Maschinenzentrum oder Werkzeugmaschine nach Anspruch 38, wobei die dritte Führung (105) und die erste Führung (113) mit etwa 90° mit Bezug auf einander und parallel zu zwei numerisch gesteuerten Translationsachsen orientiert sind.

40. Maschinenzentrum oder Werkzeugmaschine nach Anspruch 38 oder 39, wobei die dritte Führung (105) auf einer Basis (11) angeordnet ist, der ein Ständer (103) zugeordnet ist, auf dem der Kopf (9) angeordnet ist, wobei der Ständer das Temporärzwangselement (23) trägt und die Klemmelemente (19) selektiv in Richtung auf das Temporärzwangselement (23) mittels einer Bewegung des Schlittens (121) entlang der dritten Führung (105) bewegt werden und entlang der Einstellrichtung mittels einer Bewegung des Trägers entlang der ersten Führung eingestellt werden, wobei die Bewegungen entlang der ersten und der dritten Führung numerisch gesteuerte Bewegungen sind.

41. Maschinenzentrum oder Werkzeugmaschine nach einem der vorstehenden Ansprüche mit einem Portal (3A, 3B), auf dem der Kopf (9) montiert ist.

42. Maschinenzentrum oder Werkzeugmaschine nach Anspruch 41, wobei sich unter dem Portal eine feststehende Struktur (11) erstreckt, die das Temporärzwangselement (23) trägt und der eine Gleitführung (13) des zumindest einen Trägers (15) zugeordnet ist, wobei die Bewegung des Trägers entlang der Führung eine numerisch gesteuerte Bewegung ist und wobei der Träger mit einer Einstellführung (17) parallel zu der Gleitführung (13) versehen ist und auf der die Klemmelemente (19) einstellbar sind.

43. Maschinenzentrum oder Werkzeugmaschine nach einem der vorstehenden Ansprüche, wobei die Steuereinheit der Bewegungen entlang der numerisch gesteuerten Achsen programmiert ist, um die Positionen der Klemmelemente zu speichern und eine Einstellung und/oder Positionierung der Klemmelemente auf Grundlage der gespeicherten Information relativ zu der Position der Klemmelemente durchzuführen.

44. Maschinenzentrum oder Werkzeugmaschine nach einem der vorstehenden Ansprüche, wobei während der Bearbeitung der Werkstücke die zweite Einstellrichtung im Wesentlichen vertikal orientiert ist.

## Revendications

1. Centre d'usinage ou machine outil comprenant : une tête d'outil (9) ; au moins un support (15 ; 15X) pour des pièces (P) à usiner, la tête et le support étant mobiles l'un par rapport à l'autre le long d'une pluralité d'axes de translation (X, Y, Z) commandés numériquement ; et une unité de commande ; dans lequel : ledit au moins un support est prévu avec une pluralité d'éléments de serrage (19) ajustables dans des positions variables par rapport au support (15 ; 15X) le long d'au moins une première direction d'ajustement et une seconde direction d'ajustement, qui sont respectivement parallèles à un premier desdits axes de translation commandés numériquement et à un second desdits axes de translation commandés numériquement ; **caractérisé en ce que** : la distance desdits éléments de serrage (19) par rapport au support (15 ; 15X) relatif est ajustée le long de ladite seconde direction d'ajustement ; un élément de butée (10 ; 10A ; 10' ; 10") est prévu pour ajuster lesdits éléments de serrage (19) le long de ladite seconde direction d'ajustement, le mouvement relatif entre ledit élément de butée (10 ; 10A ; 10' ; 10") et le support (15 ; 15X) provoquant l'ajustement des éléments de serrage (19) le long de ladite seconde direction d'ajustement ; ledit élément de butée (10 ; 10A ; 10'; 10") et le support (15 ; 15X) sont mobiles selon un mouvement de va et vient avec un mouvement commandé numériquement afin d'ajuster lesdits éléments de serrage (19) le long de la seconde direction d'ajustement.

2. Centre d'usinage ou machine outil selon la revendication 1, dans lequel un élément de contrainte temporaire (23) associé à une structure de support de charge (11 ; 103) est prévu pour contraindre temporairement lesdits éléments de serrage (19) sur ladite structure, lesdits éléments de serrage étant configurés pour être temporairement contraints sur ledit élément de contrainte ; le mouvement relatif entre la structure de support de charge et le support (15 ; 15X) provoquant l'ajustement des éléments de serrage le long de ladite première direction d'ajustement.

3. Centre d'usinage ou machine outil selon la revendication 1 ou 2, dans lequel lesdits éléments de serrage (19) coopèrent individuellement avec ledit élément de butée (10 ; 10A ; 10' ; 10").

4. Centre d'usinage ou machine outil selon la revendication 1, 2 ou 3, dans lequel on prévoit des dispositifs de butée (19E) afin de fixer lesdits éléments de serrage (19) dans la position souhaitée le long desdites première et seconde positions d'ajustement.

5. Centre d'usinage ou machine outil selon l'une quelconque des revendications précédentes, dans lequel ledit au moins un support (15 ; 15X) des pièces (P) à usiner est mobile le long d'au moins l'un desdits axes de translation (X, Y, Z) commandés numériquement.

6. Centre d'usinage ou machine outil selon l'une quelconque des revendications précédentes, dans lequel lesdits éléments de serrage (19) ont une position zéro par rapport audit support (15 ; 15X), l'ajustement le long de ladite première direction d'ajustement étant précédé en positionnant les éléments de serrage (19) dans ladite position zéro.

7. Centre d'usinage ou machine outil selon l'une quelconque des revendications précédentes, dans lequel ladite unité de commande est programmée pour réaliser l'ajustement des éléments de serrage (19) tout d'abord le long de ladite première direction d'ajustement et ensuite le long de ladite seconde direction d'ajustement.

8. Centre d'usinage ou machine outil selon l'une quelconque des revendications précédentes, dans lequel ladite première direction d'ajustement est sensiblement horizontale et ladite seconde direction d'ajustement est sensiblement verticale.

9. Centre d'usinage ou machine outil selon l'une quelconque des revendications précédentes, dans lequel ledit au moins un support (15X) oscille ou tourne autour d'un axe d'oscillation (F) sensiblement horizontal.

10. Centre d'usinage ou machine outil selon la revendication 10, dans lequel ladite première direction d'ajustement est sensiblement parallèle audit axe d'oscillation (F).

11. Centre d'usinage ou machine outil selon la revendication 9 ou 10, dans lequel ladite seconde direction d'ajustement est sensiblement orthogonale audit axe d'oscillation (F).

12. Centre d'usinage ou machine outil selon l'une quelconque des revendications 9 à 11, dans lequel au moyen de la rotation ou de l'oscillation du support (15X) autour dudit axe d'oscillation (F), la seconde direction d'ajustement est prise de manière alternée par rapport à la position horizontale ou verticale.

13. Centre d'usinage ou machine outil selon la revendication 12, dans lequel le positionnement des éléments de serrage (19) le long de ladite seconde direction d'ajustement est réalisé avec ladite direction d'ajustement en position horizontale.

14. Centre d'usinage ou machine outil selon la revendication 12, dans lequel le positionnement des éléments de serrage (19) le long de ladite seconde direction d'ajustement est réalisé avec ladite direction d'ajustement dans la position horizontale.

15. Centre d'usinage ou machine outil selon l'une quelconque des revendications précédentes, dans lequel les mouvements de va et vient commandés numériquement pour ajuster les éléments de serrage (19) sont commandés par les mêmes axes commandés numériquement qui sont prévus sur le centre d'usinage ou machine outil afin de réaliser l'usinage des pièces.

16. Centre d'usinage ou machine outil selon l'une quelconque des revendications précédentes, dans lequel le positionnement des éléments de serrage (19) a lieu en utilisant les mêmes capteurs ou transducteurs que ceux utilisés pour l'usinage des pièces.

17. Centre d'usinage ou machine outil selon l'une quelconque des revendications précédentes, dans lequel ledit élément de butée (10) pour ajuster les éléments de serrage (19) le long de ladite seconde direction est contraint sur la tête (9).

18. Centre d'usinage ou machine outil selon la revendication 17, dans lequel ledit élément de butée (10') est solidaire d'une glissière (7) supportant la tête (9).

19. Centre d'usinage ou machine outil selon la revendication 17, dans lequel ledit élément de butée (10) est solidaire d'un carter de broche de la tête (9).

20. Centre d'usinage ou machine outil selon la revendication 17, dans lequel ledit élément de butée (10"') est solidaire d'un montant (103) sur lequel la tête (9) est supportée.

21. Centre d'usinage ou machine outil selon la revendication 17, dans lequel ledit élément de butée (10") est solidaire d'une structure fixe (106).

22. Centre d'usinage ou machine outil selon la revendication 20 ou 21, dans lequel ledit support (15 ; 15X) est mobile le long d'un axe (X) commandé numériquement pour se déplacer vers ou s'éloigner dudit élément de butée (10", 10"').

23. Centre d'usinage ou machine outil selon l'une quelconque des revendications précédentes, dans lequel au moins certains desdits supports (15, 15X) comprennent deux éléments mobiles selon un mouvement de va et vient l'un rapport à l'autre.

24. Centre d'usinage ou machine outil selon la revendication 23, dans lequel lesdits éléments mobiles selon un mouvement de va et vient peuvent être positionnés de manière alternée le long de ladite seconde direction d'ajustement.

25. Centre d'usinage ou machine outil selon l'une quelconque des revendications précédentes, dans lequel ladite tête (9) est mobile le long d'au moins un second axe (X, Z) commandé numériquement.

26. Centre d'usinage ou machine outil selon l'une quelconque des revendications précédentes, dans lequel ladite première direction d'ajustement est parallèle à un axe de translation (Y) commandé numériquement dudit support (15).

27. Centre d'usinage ou machine outil selon l'une quelconque des revendications précédentes, dans lequel ladite tête (9) est prévue avec un mouvement selon au moins un axe commandé numériquement par rapport audit élément de contrainte temporaire (23).

28. Centre d'usinage ou machine outil selon la revendication 27, dans lequel ladite tête (29) est prévue avec un mouvement de translation commandé numériquement par rapport à la structure supportant l'élément de contrainte temporaire (23).

29. Centre d'usinage ou machine outil selon l'une quelconque des revendications précédentes, dans lequel ledit support (15) est mobile le long dudit premier axe commandé numériquement, afin de se déplacer vers et de s'éloigner selon un mouvement de va et vient desdits éléments de serrage (19) et dudit élément de contrainte temporaire (23).

30. Centre d'usinage ou machine outil selon la revendication 29, dans lequel ladite structure avec laquelle l'élément de contrainte temporaire (23) est associé, est un montant (103) sur lequel ladite tête (9) est supportée et dans lequel ledit au moins un support (15) et ledit montant (103) sont prévus avec un mouvement de va et vient vers et à distance l'un de l'autre.

31. Centre d'usinage ou machine outil selon la revendication 30, dans lequel ledit mouvement de va et vient vers et à distance l'un de l'autre est un mouvement commandé numériquement le long d'un axe commandé numériquement.

32. Centre d'usinage ou machine outil selon la revendication 30 ou 32, dans lequel ladite tête (9) est prévue avec au moins un mouvement de translation selon un axe commandé numériquement le long dudit montant (103).

33. Centre d'usinage ou machine outil selon la revendication 30, 31 ou 32, dans lequel ledit montant (103) est supporté par une base fixe (11) et ledit support (15) est prévu avec un premier mouvement vers et à distance dudit montant (103) et avec un second mouvement de translation sensiblement parallèle à ladite direction d'ajustement.

34. Centre d'usinage ou machine outil selon l'une quelconque des revendications 31 à 33, dans lequel ledit montant (103) est mobile le long d'un axe de translation (X) commandé numériquement et dans lequel ladite première direction d'ajustement est parallèle audit axe de translation le long duquel le montant est mobile.

35. Centre d'usinage ou machine outil selon l'une quelconque des revendications précédentes, dans lequel ledit support (15) est mobile le long d'un premier guide (13 ; 113 ; 205) parallèle à un axe de translation (Y) commandé numériquement dudit support (15) et à ladite première direction d'ajustement et dans lequel un second guide (17 ; 117) sensiblement parallèle audit premier guide et le long duquel lesdits éléments de serrage sont ajustables, est contraint sur ledit support.

36. Centre d'usinage ou machine outil selon la revendication 35, dans lequel ledit premier guide (13) est supporté par la structure (11, 21) avec laquelle ledit élément de contrainte temporaire (23) est associé.

37. Centre d'usinage ou machine outil selon la revendication 35, dans lequel ladite structure avec laquelle ledit élément de contrainte temporaire est associé, est solidaire d'une base de laquelle ledit premier guide est solidaire.

38. Centre d'usinage ou machine outil selon la revendication 35, dans lequel ledit premier guide (113) est prévu sur un chariot (121) mobile le long d'un troisième guide (105) non parallèle au premier guide (113) et au deuxième guide (117), afin de permettre aux éléments de serrage (19) de se déplacer vers et de s'éloigner de la structure de support de charge (103) à laquelle ledit élément de contrainte temporaire (23) est associé.

39. Centre d'usinage ou machine outil selon la revendication 38, dans lequel ledit troisième guide (105) et ledit premier guide (113) sont orientés à approximativement 90° l'un par rapport à l'autre et parallèles à deux axes de translation commandés numériquement.

40. Centre d'usinage ou machine outil selon la revendication 38 ou 39, dans lequel ledit troisième guide (105) est agencé sur une base (11) associée avec un montant (103) sur lequel ladite tête (9) est agencée, le montant supportant ledit élément de contrainte temporaire (23) et les éléments de serrage (19) étant sélectivement déplacés vers l'élément de contrainte temporaire (23) au moyen d'un mouvement dudit chariot (121) le long dudit troisième guide (105) et étant ajustés le long de la direction d'ajustement au moyen d'un mouvement du support le long dudit premier guide, les mouvements le long du premier et du troisième guide étant des mouvements commandés numériquement.

41. Centre d'usinage ou machine outil selon l'une quelconque des revendications précédentes, comprenant une passerelle (3A, 3B) sur laquelle ladite tête est montée (9).

42. Centre d'usinage ou machine outil selon la revendication 41, dans lequel sous ladite passerelle, s'étend une structure fixe (11) supportant ledit élément de contrainte temporaire (23) et avec lequel un guide de coulissement (13) dudit au moins un support (15) est associé, le mouvement du support le long dudit guide étant un mouvement commandé numériquement ; et dans lequel ledit support est prévu avec un guide d'ajustement (17) parallèle audit guide de coulissement (13) et sur lequel lesdits éléments de serrage (19) sont ajustables.

43. Centre d'usinage ou machine outil selon l'une quelconque des revendications précédentes, dans lequel ladite unité de commande des mouvements le long des axes commandés numériquement est programmée afin de mémoriser les positions desdits éléments de serrage et afin de réaliser l'ajustement et/ou le positionnement des éléments de serrage en fonction de l'information mémorisée par rapport à la position desdits éléments de serrage.

44. Centre d'usinage ou machine outil selon l'une quelconque des revendications précédentes, dans lequel pendant l'usinage des pièces, ladite seconde direction d'ajustement est orientée sensiblement verticalement.
